# EUROPEAN PATENT APPLICATION

(11) **EP 0 981 963 A1**
(43) Date of publication of application: **01.03.2000**
(21) Application number: 98310520.6
(22) Date of filing: 21.12.1998
(51) Int. Cl.: A22C 13/00

(54) **Puncture resistant plastic food casing**

(30) Priority: 24.08.1998 US 139059
(71) Applicant: Teepak Investments, Inc., Wilmington, Delaware 18140 (US)
(72) Inventor: Zimmerman, Edward N., Danville, Illinois 61832 (US); Walitalo, Charles R., Champagne, Illinois 61821 (US)
(74) Representative: MacDougall, Donald Carmichael

(57) **Abstract**

A tubular food casing which includes a layered film structure in the form of a tube having a plurality of layers. At least one of the layers contains a metallocene polyolefin resin. The invention also includes the unique layered film from which the tubular food casing is made and the method for making the film and the tubular film. The layer containing metallocene polyolefin resin may include a blend which contains from about 60 to about 90 weight percent low density polyethylene and from about 10 to about 40 weight percent metallocene polyethylene. The tubular food casing may further include at least one nylon layer and at least one polyalkylvinyl alcohol layer. The food casing may also include at least one tie layer between the metallocene containing layer and the nylon layer to laminate the metallocene containing layer and the nylon layer together. The layers may be either coextruded or laminated layers.

## Description

### Background of the Invention

This invention relates to food casings, and more particularly relates to food casings made of plastic film materials. In accordance with the invention, such food casings are generally tubular in shape and food is stuffed into the tubular film.

The first tubular food casings were intestinal materials which were cleaned and then stuffed with food product, e.g. meats to form sausages. The use of intestinal materials was not, however, suitable for modern streamlined and rapid manufacturing methods since cleaning of intestinal product was labor intensive, time consuming and expensive. Furthermore, such products did not have a uniform diameter and the source of supply of such materials could not meet the current demand for sausage and other food products stuffed into tubular casings.

Artificial tubular food casings were then made to overcome the deficiencies of intestinal materials. The first commercially successful artificial tubular food casings were made from regenerated cellulose. Such casings were made either by extruding viscose into the shape of a tube and then regenerating cellulose from the viscose or by folding a fiber mat, e.g. paper into a tube and then impregnating the paper with the viscose followed by regeneration to form a tube comprising a fiber reinforced regenerated cellulose. Regenerated cellulose tubes are still used today due to desirable properties for most food stuffing operations. Such tubes are generally permeable to water, gases and smoke vapors making the casing ideal for subsequent treatment, e.g. smoking, of contained food product. Such casings were not, however, edible which led to the development of edible casings made from collagen which simulated the edible nature of the original intestinal material.

However, in certain applications, there is a need for a tubular food casing which has properties not met by either regenerated cellulose or collagen. There are situations in which permeability is not desired and where higher strength, flexibility and puncture resistance are desired than are normally available with regenerated cellulose or collagen casings.

Toward that end laminated plastic tubular films have been developed. Such films have commonly been made from low density polyethylenes (either linear or branch chained or mixtures thereof) alone or in layer form, i.e., laminated or coextruded form with polyamide film, e.g. nylon (usually nylon 6 or nylon 66). Such tubular films have also been made which incorporate a layer of a polyvinylalcohol (such as ethylvinyl alcohol, EVOH) as an oxygen barrier layer.

While such laminated plastic films have met with success, they still do not perform as well as desired.

Thin plastic film casings (usually less than .003" thick) must be rigid enough to mold the contained meat emulsion into a uniform tubular form (called a "chub" in the industry); yet, this film must be thin and pliable enough to be gathered and crimped under a metal end-clip closure without becoming cut or torn by the clip or allowing air and moisture leakage though the crimped ends of the package. Furthermore, the chub usually contains a semi-fluid mixture of ground meat, ingredients and water and the casing must maintain the tubular form, withstanding drops, blunt blows and impacts throughout the processing operation, cartoning, shipping and the rigors of retail handling. In addition, a variety of other film characteristics are necessary for machinability, sealability, oxygen barrier, hot, warm and cold filling operations, fresh, frozen and crust freeze applications, and so forth. The film must be functional yet have good clarity, gloss and printability for consumer appeal.

Several films and film laminates are available which serve this packaging market; however, none of them offer optimal properties at competitive prices.

For example, as previously mentioned, nylon may be used in these applications in combination with other film layers to provide structural strength to a thin film. Films such as EVOH may be used to provide the necessary oxygen barrier. The properties of both nylon and EVOH are altered with any exposure to moisture. Also, both films have poor puncture resistance and fluid impact strength in these applications, as tests have shown. Therefore, these films are kept to the minimum layer values in the structure to obtain their respective beneficial properties.

Polyethylene is generally more pliable, provides structural strength, and moisture barrier properties. However, conventional blends of polyethylene such as LDPE (branched low density polyethylene) and LLDPE (linear low density polyethylene) (and derivatives) influence the pliability of the total structure at higher percentages of the structure. This increases the total thickness of the structure contributing to the problems previously discussed, and reduces yield and clarity.

If a more easily sealable, thinner pliable and puncture resistant oxygen barrier film layer were available, (1) total thickness would be reduced, (2) clarity would be improved, (3) package survival would be increased, (4) manufacturing methods (film extrusion) could be expanded, (5) yield could be improved, and (6) casing utilization could be increased at the stuffing location because more could be placed on a roll.

Metallocene catalyzed polymers, or metallocene plastomers, were introduced by the plastics industry approximately seven or eight years ago. These plastomer products offer significant performance benefits, in this case to low density polyethylene. The primary disadvantage of metallocene has been and continues to be expense, and the processability of the resin in extrusion operations.

### Brief Description of the Drawings

Figure 1 shows a tubular food casing of the invention.
Figure 2 shows a cross section of a tubular food casing of the invention
Figure 3 shows a cross section of a laminated film used to make a tubular food casing of the invention.

### Brief Description of the Invention

The invention is a tubular food casing which includes a laminated film structure in the form of a tube having a plurality of laminated layers. At least one of the layers contains a metallocene polyolefin resin. The invention also includes the unique laminated film from which the tubular food casing is made and the method for making the film and the tubular film. The layer containing metallocene polyolefin resin may include a blend which contains from about 60 to about 90 weight percent low density polyethylene and from about 10 to about 40 weight percent metallocene polyethylene. The tubular food casing may further include at least one nylon layer and at least one polyalkylvinyl alcohol layer.

The food casing may also include at least one tie layer between the metallocene containing layer and the nylon layer to laminate the metallocene containing layer and the nylon layer together.

### Detailed Description of the Invention

The tubular food casing of the invention may include numerous layers so long as at least one of the layers contains a metallocene resin.

For example in at least one preferred embodiment, the film has at least seven layers which may be described as follows:
a) a first layer being a film including a blend of between about 15 and about 25 weight percent metallocene polyethylene, and between about 75 and about 85 weight percent of a low density polyethylene,
b) a second layer being a tie layer including an adhering polymer,
c) a third layer including nylon,
d) a fourth layer including a polyvinyl alcohol
e) a fifth layer including nylon,
f) a sixth layer being a tie layer including an adhering polymer, and
g) a seventh layer being a film including a blend of between about 15 and about 25 weight percent metallocene polyethylene, and between about 75 and about 85 weight percent of a low density polyethylene.

The low density polyethylene, e.g. molecular weight 5,000 to 50,000, may be a blend of linear polyethylene (LLDPE) and branch chain polyethylene (LDPE) made using traditional Ziegler-Natta type catalysts.

The preferred metallocene polymer has narrow molecular weight distribution which may be indicated by the ratio of weight average molecular weight to number average molecular weight. Such resins preferably have a ratio of weight average molecular weight to number average molecular weight of between about 2 and about 2.25. The metallocene polymer has a weight average molecular weight of between about 5,000 and 50,000. Metallocene polymers are olefin and vinyl type polymers prepared using metallocene catalysts. Examples of such polymers suitable for use in accordance with the present invention are metallocene polyethylenes and metallocene polypropylenes. The metallocene polyolefin is preferably a polyethylene metallocene polymer. An especially preferred metallocene polymer is sold under the trademark EXACT 3132 by Exxon Corporation. Exact 3132 has a melt index of 1.2 g/10 min, a density of 0.9, a peak melt temperature of 96°C, a tensile break strength of 65.2 MPa (9520 psi) in the machine direction and 62.3 MPa (9100 psi) in the transverse direction and a puncture resistance force of 8 lbs/mil. In the preferred embodiment, the metallocene polymer is mixed with standard low density polyethylene polymers at a temperature above the softening temperature of the polymers to form the preferred blend. The blend is then extruded into the desired metallocene containing film layer.

The tie layer between the metallocene layer and nylon layer contains an adhesive polymer which is food approved. Examples of preferred resins for inclusion in the tie layer are acrylate polymers having adhesive properties and anhydride modified linear low density polyethylenes. An especially preferred resin for use in the tie layer is BYNEL CXA 4125 coextrudable rubber-anhydride modified linear low density polyethylene available from The DuPont Corporation. Such resin has a melt index of 2.5 dg/min, a density of 0.926, a melt point of 126°C and a freeze point of 110°C.

The nylon layer may be made from any suitable polyamide type polymer but is preferably either nylon 6 or nylon 6-6 or mixtures thereof.

A vapor barrier layer usually comprising a polyvinyl alcohol is also preferably present. The preferred polyvinyl alcohol is polyethylvinyl alcohol (EVOH).

The tubular food casing of the invention may be extruded as a tube in multilayer form or may be a sealed seam tubular food casing made from a flat laminated film structure having a plurality of laminated layers, at least one of said layers containing a metallocene polyolefin resin.

The tubular film of the invention preferably has a total thickness, i.e., the total laminated structure, of from about 0.001 to about 0.002 inch.

A seamed tubular food casing of the invention may be made by rolling a flat film having opposing edges into the shape of a cylinder so that said edges are proximate each other and sealing surfaces of the film together near the edges, where the flat film is a laminated film structure having a plurality of laminated layers and at least one of the layers contains a metallocene polyolefin resin.

A preferred form of the invention comprises:
a) a 7-layer coextruded barrier film structure approximately 1.25 mils in thickness consisting of (1) two outer skin layers, each approximately 33% of the total thickness, extruded with a blend of 20% Exxon Exact 3132 metallocene resin with 80% of a 90%/10% mixture of linear low density polyethylene and low density polyethylene plus slip and antiblock additives; (2) two intermediate tie-layers, each approximately 5% of the total thickness, extruded with an acrylate resin; (3) two additional inner layers, each approximately 8% of the total thickness, extruded with a nylon blend of 60% nylon 6 and 40% nylon 66 (amorphous nylon); and (4) one center (core) layers, approximately 8% of the total thickness, extruded with an EVOH baffler resin.
b) (a) above, treated on one side to accept print;
c) (b) above, printed as required;
d) (c) above, dry-bond adhesive laminated with an adhesive white ink to a monolayer film sealant web, approximately 1.0 mils in thickness. The monolayer film was extruded with a blend of 20% Exxon Exact 3132 metallocene resin with 80% of a 90%/10% mixture of linear low density polyethylene and low density polyethylene plus slip, antiblock and colorant additives.

The above food casing was compared to an identical control casing except that the linear low density polyethylene resin was used without blending with metallocene resin. The results are shown in the Table.

**TABLE**

| | Control | Metallocene Containing Casing |
|---|---|---|
| Gauge | 2.5 | 2.25 |

| Tensile Strength | | |
|---|---|---|
| Machine Direction | 4807 psi | 4020 psi |
| Transverse Direction | 3333 psi | 3374 psi |

| Elongation at Break | | |
|---|---|---|
| Machine Direction | 364% | 356% |
| Transverse Direction | 437% | 459% |

| Modulus | | |
|---|---|---|
| Machine Direction | 43120 psi | 43025 psi |
| Transverse Direction | 45610 psi | 53250 psi |
| Oxygen Transfer | 1.4 cc/m²/day | 2.1 cc/m²/day |
| Dart Impact ASTM D1709 | 125 g/mil | 153 g/mil |
| End Drop Test | 5 pass / 15 fail | 20 pass / 0 fail |

In the end drop test, casing is stuffed with sausage meat and dropped on end from a standard height.

Laboratory and field tests demonstrated that the puncture resistance of a 7-layer structure with as little as a 20% blend of metallocene in the skin layers is comparable or better than the previous LDPE/LLDPE blend at a 17% overall thinner gauge. Packaging tests indicate the other attributes of the casing are not compromised (i.e., uniformity, machinability) and yet other attributes are enhanced such as sealability (speed, strength), clarity, clipping, etc.

In addition, this 7-layer structure laminated to a monolayer sealant web, approximately .001" thick, of the same metallocene blend further enhances puncture and impact resistance of the total film casing.

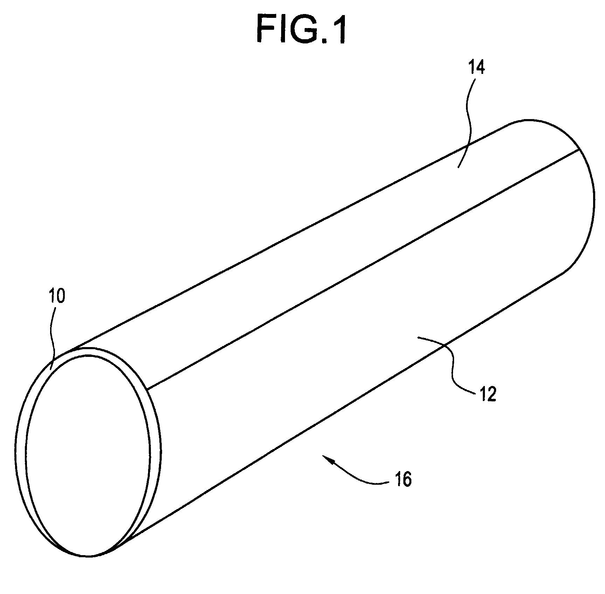

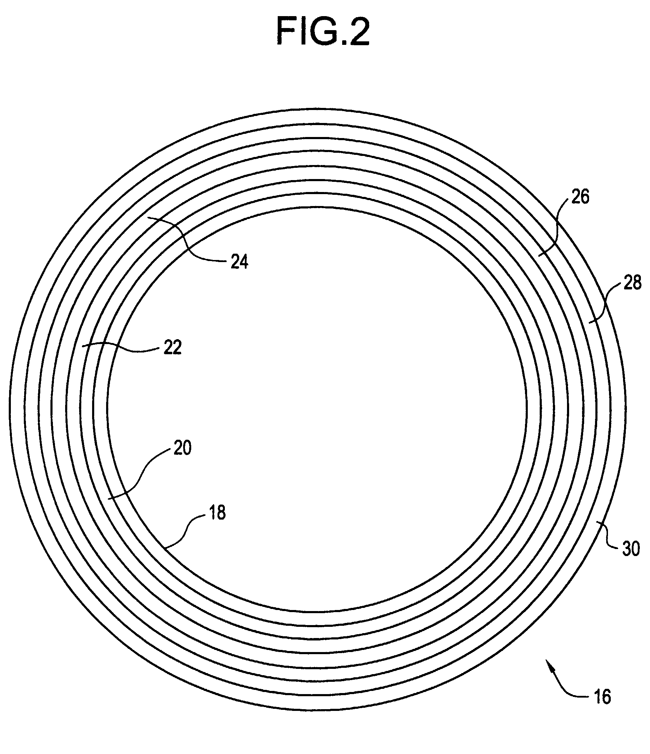

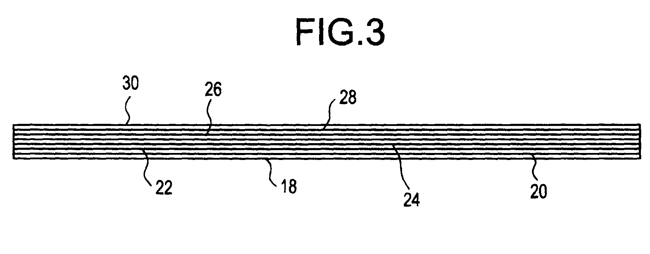

Figure 1 shows an embodiment of the invention wherein a coextruded film 10, is curved into the shape of a tube 12 and seamed at seam 14 to form food casing 16. Figure 2 shows interior metallocene layer 18 followed by tie layer 20, nylon layer 22, EVOH layer 24, nylon layer 26, tie layer 28 and outside metallocene layer 30. Figure 3 shows a cross-section of coextruded film 32 used to make a food casing as shown in Figure 1, showing layers 18, 20, 22, 24, 26, 28 and 30, as shown in Figure 2.

## Claims

1. A tubular food casing comprising a layered film structure in the form of a tube having a plurality of layers, characterized in that at least one of said layers contains a metallocene polyolefin resin.

2. The casing of Claim 1, characterized in that at least some of said layers are coextruded layers.

3. The casing of Claim 1, characterized in that at least one of the layers is a laminated layer.

4. The tubular food casing of Claim 1 characterized in that the layer containing metallocene polyolefin resin comprises a blend of from about 60 to about 90 weight percent low density polyethylene and from about 10 to about 40 weight percent metallocene polyethylene.

5. The tubular food casing of Claim 4 characterized in that the tubular food casing further comprises at least one nylon layer.

6. The tubular food casing of Claim 5 characterized in that the food casing comprises at least one tie layer intermediate said at least one metallocene containing layer and said nylon layer to adhere the metallocene containing layer and the nylon layer together.

7. The tubular food casing of Claim 6 characterized in that said film comprises at least seven coextruded layers:
a) the first layer being a film comprising a blend of between about 15 and about 25 weight percent metallocene polyethylene, and between about 75 and about 85 weight percent of a low density polyethylene,
b) the second layer being a tie layer comprising an adhesive material,
c) the third layer comprising nylon,
d) the fourth layer comprising a polyvinyl alcohol
e) the fifth layer comprising nylon,
f) the sixth layer being a tie layer comprising an adhesive material, and
g) the seventh layer being a film comprising a blend of between about 15 and about 25 weight percent metallocene polyethylene, and between about 75 and about 85 weight percent of a low density polyethylene.

8. The food casing of Claim 7, characterized in that it further comprises an eighth layer comprising a blend of between about 15 and about 25 weight percent metallocene polyethylene, and between about 75 and about 85 weight percent of a low density polyethylene, said eighth layer being laminated to said seventh layer by means of an adhesive.

9. The tubular food casing of Claim 7 characterized in that the low density polyethylene is a blend of linear and branch chain polyethylenes.

10. The tubular film of Claim 1 characterized in that the metallocene polyolefin is a polyethylene metallocene polymer.

11. The tubular film of Claim 1 characterized in that the metallocene polymer has a ratio of weight average molecular weight to number average molecular weight of between about 2 and about 2.25.

12. The tubular film of Claim 2 characterized in that the metallocene polymer has a ratio of weight average molecular weight to number average molecular weight of between about 2 and about 2.25.

13. The tubular film of Claim 5 characterized in that the metallocene polymer has a ratio of weight average molecular weight to number average molecular weight of between about 2 and about 2.25.

14. The tubular film of Claim 6 characterized in that the metallocene polymer has a ratio of weight average molecular weight to number average molecular weight of between about 2 and about 2.25.

15. The tubular film of Claim 7 characterized in that the metallocene polymer has a ratio of weight average molecular weight to number average molecular weight of between about 2 and about 2.25.

16. The tubular film of Claim 8 characterized in that the metallocene polymer has a ratio of weight average molecular weight to number average molecular weight of between about 2 and about 2.25.

17. The tubular film of Claim 9 characterized in that the metallocene polymer has a ratio of weight average molecular weight to number average molecular weight of between about 2 and about 2.25.

18. The tubular film of Claim 10 characterized in that the metallocene polymer has a ratio of weight average molecular weight to number average molecular weight of between about 2 and about 2.25.

19. The tubular film of Claim 11 characterized in that the metallocene polymer has a weight average molecular weight of between about 5,000 and 50,000.

20. The tubular film of Claim 1 characterized in that the total laminated structure has a thickness of from about 0.001 to about 0.002 inch.

21. The tubular film of Claim 7 characterized in that the total laminated structure has a thickness of from about 0.001 to about 0.002 inch.

22. The tubular film of Claim 6 characterized in that the tie layer comprises an anhydride modified linear low density polyethylene.

23. The tubular film of Claim 7 characterized in that the tie layer comprises an anhydride modified linear low density polyethylene.

24. The tubular food casing of Claim 1 characterized in that the food casing is a sealed seam tubular food casing comprising a coextruded film structure having a plurality of coextruded layers, at least one of said layers containing a metallocene polyolefin resin.

25. A method for making the seamed tubular food casing of Claim 24 which comprises rolling a flat film having opposing edges into the shape of a cylinder so that said edges are proximate each other and sealing surfaces of the film together proximate said edges wherein the flat film comprises a coextruded film structure having a plurality of coextruded layers, characterized in that at least one of said layers contains a metallocene polyolefin resin.
